# EUROPÄISCHE PATENTSCHRIFT

(11) **EP 2 102 475 B1**
(45) Veröffentlichungstag und Bekanntmachung des Hinweises auf die Patenterteilung: **28.07.2010**
(21) Anmeldenummer: 07847290.9
(22) Anmeldetag: 23.11.2007
(51) Int. Cl.: F02D 41/22, F02D 41/04

(54) **VERFAHREN UND VORRICHTUNG ZUR ERKENNUNG EINES KONTINUIERLICHEN KRAFTSTOFFEINTRAGS IN DAS SCHMIERÖL EINER BRENNKRAFTMASCHINE BEIM KALTSTART**
METHOD AND APPARATUS FOR DETECTING A CONTINUOUS INGRESS OF FUEL INTO THE LUBRICATING OIL OF AN INTERNAL COMBUSTION ENGINE DURING COLD STARTING
PROCÉDÉ ET DISPOSITIF DE DÉTECTION D'UNE PÉNÉTRATION CONTINUE DE CARBURANT DANS L'HUILE DE LUBRIFICATION D'UN MOTEUR À COMBUSTION INTERNE EN CAS DE DÉMARRAGE À FROID

(30) Priorität: 18.12.2006 DE 102006059675
(43) Veröffentlichungstag der Anmeldung: 23.09.2009
(73) Patentinhaber: Robert Bosch GmbH, 70442 Stuttgart (DE)
(72) Erfinder: MIERSCH-WIEMERS, Oliver, 70180 Stuttgart (DE); MUELLER, Norbert, Farmington Hills, Michigan 48331 (US); DÜRR, Mike, 71726 Benningen (DE); RAIMANN, Juergen, 71263 Weil Der Stadt (DE)
(86) Internationale Anmeldenummer: PCT/EP2007/062724
(87) Internationale Veröffentlichungsnummer: WO 2008/074591

(56) Entgegenhaltungen:
- EP-A- 1 357 280
- EP-A- 1 602 815
- EP-A- 1 722 087
- DE-A1-102004 033 414
- FR-A- 2 862 087
- FR-A- 2 866 957
- FR-A- 2 872 214
- US-A1- 2006 016 429
- US-A1- 2006 219 207

## Beschreibung

### Stand der Technik

Die vorliegende Erfindung betrifft ein Verfahren zur Erkennung eines kontinuierlichen Kraftstoffeintrags in das Schmieröl einer Brennkraftmaschine insbesondere eines Kraftfahrzeugs beim Kaltstart sowie ein Steuergerät zur Steuerung einer Brennkraftmaschine entsprechend einem solchen Verfahren, gemäß den Oberbegriffen der jeweiligen unabhängigen Ansprüche.

In heutigen Brennkraftmaschinen mit Benzindirekteinspritzung erfolgt die Kraftstoffversorgung in an sich bekannter Weise mit Kraftstoffdrücken von bis zu 200 bar. In einzelnen Bereichen der Direkteinspritzung wie bspw. bei strahlgeführten Brennverfahren oder höchstaufgeladenen Brennkraftmaschinen treten sogar noch höhere Drücke auf. Um die zur Erzeugung dieser Drücke erforderlichen Kräfte von einer Nockenwelle oder einer Kurbelwelle der Brennkraftmaschine auf eine Hochdruckpumpe übertragen zu können, müssen in diesen Pumpen bekanntermaßen verwendete Pumpenstößel mit Schmieröl aus dem Ölkreislauf der Brennkraftmaschine versorgt werden.

Kommt es nun zu einer erhöhten Undichtigkeit von zwischen dem Ölkreislauf und dem Kraftstoffkreislauf angeordneten Dichtungen, so kann Kraftstoff mit dem Vorförderdruck eines in der Brennkraftmaschine angeordneten Niederdruckkreislaufs in den genannten Ölkreislauf gelangen. Die daraus resultierende Verdünnung des Schmieröls (Motoröls) der Brennkraftmaschine ist in den vorveröffentlichten Anmeldungen DE 10 2004 033 413 A1 und DE 10 2004 033 414 A1 vorbeschrieben.

In der genannten DE 10 2004 033 413 A1 wird insbesondere ein Ölverdünnungssignal ermittelt, welches ein Maß für das Volumen der in das Motoröl der Brennkraftmaschine durch wenigstens eine Kraftstoff-Nacheinspritzung eingetragenen Ölverdünnung. Die genannte Nacheinspritzung dient dazu, unverbrannten Kraftstoff als Brennstoff in den Abgasbereich der Brennkraftmaschine einzubringen, welcher im Abgasbereich zur Beheizung einer Abgasbehandlungsvorrichtung exotherm reagiert. Dadurch ist es möglich, die Ölverdünnung allein aus vorhandenen Betriebskenngrößen der Brennkraftmaschine zu ermitteln. EP 1 357 280 beschreibt ebenfalls ein Verfahren zur Schätzung der Verdünnung des Motoröls durch Kraftstoff.

In der genannten DE 10 2004 033 414 A1 wird zusätzlich vorgeschlagen, das genannte Ölverdünnungssignal bei der Ermittlung des Ölstands des Motoröls der Brennkraftmaschine zu berücksichtigen. Dadurch wird ermöglicht, das Maß für den Ölstand allein aus vorhandenen Betriebskenngrößen der Brennkraftmaschine ermitteln zu können.

Die genannte Ölverdünnung führt wegen der verschlechterten Schmierung zu einer verringerten Lebensdauer der Brennkraftmaschine.

Zur Überwachung der Ölgüte werden bereits Ölgütesensoren eingesetzt. Ein beschriebener erhöhter Kraftstoffeintrag führt mittels dieser Sensoren zu stark verkürzten Ölwechselintervallen, was zwar einem Schaden der Brennkraftmaschine vorbeugt, jedoch aufgrund der verkürzten Serviceintervalle und den damit verbundenen erhöhten Kosten der Akzeptanz der genannten Brennkraftmaschinen mit Kraftstoff-Direkteinspritzung eher entgegenwirkt.

Zudem werden die genannten Ölgütesensoren aufgrund der zusätzlichen Einbaukosten für diese Sensoren nur in Brennkraftmaschinen der gehobenen Fahrzeugklasse eingesetzt und sind daher noch nicht sehr verbreitet.

Darüber hinaus ist die Erkennung einer undichten Hochdruckpumpe auch auf der Grundlage der genannten Ölgütesensoren nicht eindeutig möglich.

### Offenbarung der Erfindung

Der vorliegenden Erfindung liegt der Gedanke zugrunde, einen kontinuierlichen Eintrag von Kraftstoff in das Schmieröl einer Brennkraftmaschine beim Kaltstart der Brennkraftmaschine mittels einer Lambda-Regelung zu erkennen.

Der bei der Erfindung zugrunde liegende technische Effekt liegt darin, dass der Eintrag von Kraftstoffdämpfen aus einer Kurbelgehäuse-Entlüftung in ein Saugrohr der Brennkraftmaschine zu einer Gemischanreicherung im Brennraum bzw. in den Brennräumen der Brennkraftmaschine und damit zu einer Messwertänderung an einer Lambdasonde der Lambda-Regelung führt. Da die Lambda-Regelung im Betriebsfall der Brennkraftmaschine in jedem Fall aktiviert ist, lässt sich die Ausgasung aus dem Kurbelgehäuse zuverlässig als Abmagerung der Adaptionswerte einer mit der Lambda-Regelung zusammen arbeitenden Leerlaufregelung erkennen.

Die Größe des an der Lambdasonde gemessenen Messwertes ist von der Höhe des Massenstroms der Kraftstoffdämpfe und dem an der Brennkraftmaschine aktuell eingestellten Betriebspunkt, d.h. der relativen Luftmasse des Kraftstoff-Luft-Gemisches, abhängig. Dieser Massenstrom ist ferner von der Konzentration des Kraftstoffs im Öl und von der Betriebstemperatur der Brennkraftmaschine abhängig.

Die genannten Adaptionswerte sind weiteren Störfaktoren unterworfen, wie bspw. Störungen aufgrund von Belagbildung von Kraftstoff-Einlassventilen, von Undichtigkeiten im Saugrohr, von Belagbildung bei Kraftstoff-Injektoren oder von Undichtigkeiten oder Einflüssen einer bei heutigen Brennkraftmaschinen meist vorgesehenen Tankentlüftung. Daher wird erfindungsgemäß bevorzugt eine zeitliche Änderung der Adaptionswerte der Lambda-Regelung in Abhängigkeit von einer reproduzierbaren Änderung des Zustandes der Brennkraftmaschine zur Erkennung einer Undichtigkeit der Hochdruckpumpe herangezogen.

Der Erfindung liegt ferner die Erkenntnis zugrunde, dass eine solche reproduzierbare zeitliche Änderung beim Kaltstart der Brennkraftmaschine bei Temperaturen zwischen 10 und 30° C gegeben ist.

Die Erfindung ermöglicht eine zuverlässige Erkennung einer vorgenannten Undichtigkeit einer eingangs beschriebenen Hochdruckpumpe.

Das erfindungsgemäße Verfahren kann in einem Steuergerät der Brennkraftmaschine in der Form eines Steuercodes oder in der Form einer elektronischen Schaltung realisiert werden.

### Kurze Beschreibung der Zeichnungen

Die Erfindung wird nachfolgend, unter Heranziehung der beigefügten Zeichnungen, anhand von möglichen Ausführungsformen eingehender beschrieben, aus denen sich weitere Merkmale und Vorteile der Erfindung ergeben.

In den Zeichnungen zeigen:
- Fig. 1a-c: drei zeitliche Verläufe eines Lambda-Signals zur Illustration des erfindungsgemäßen Verfahrens beim Betrieb einer hier betroffenen Brennkraftmaschine beim Kaltstart und
- Fig. 2: eine bevorzugte Ausführungsform des erfindungsgemäßen Verfahrens anhand eines Flussdiagramms.

### Ausführungsformen der Erfindung

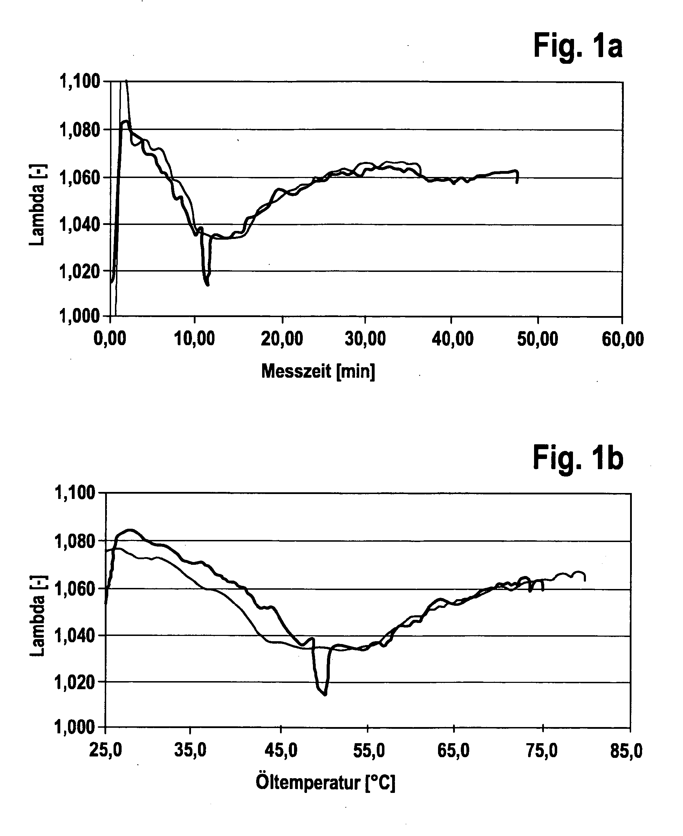

In der Fig. 1a ist der zeitliche Verlauf des von einer Lambdasonde gelieferten Rohsignals gezeigt, welches an einem Prüfstandmotor während eines Kaltstarts mit anschließendem Leerlauf ermittelt wurde. In der Fig. 1a sind zwei zu verschiedenen Zeiten an dem Prüfstandmotor gemessene Rohsignale dargestellt. Das vorliegende Rohsignal entspricht der Situation einer funktionstüchtigen Dichtung zwischen dem Ölkreislauf und dem Kraftstoffkreislauf, d.h. es tritt vorliegend kein eingangs beschriebener Ölverdünnungseffekt auf.

Der gezeigte Rohsignal-Verlauf von Lambda wurde zwischen dem Kaltstart des Motors bei t = 0,00 min und einer vorliegend oberen Zeitgrenze von etwa 37,00 bei der ersten der genannten Kurven bzw. 50,00 min bei der zweiten dieser Kurven gemessen, und zwar im Leerlauf des Motors und einer nach etwa 30,00 min schließlich eingetretenen Betriebstemperatur des Prüfstandmotors bzw. Öltemperatur von etwa 80° C.

Wie aus der Fig. 1a zu ersehen, durchläuft das Rohsignal eine charakteristische Kurve, bei der das Signal nach einer kurzen Einschwingphase von etwa 3 min innerhalb von etwa 10 min kontinuierlich abfällt. Ab diesem Zeitpunkt beginnt das durch den Kaltstart eingetragene Benzin aufgrund der erhöhten Temperatur des Motoröls auszudampfen. Dieses ausdampfende Benzin führt nun zu einer Anfettung des Kraftstoff-Luft-Gemisches und das Signal der Lambdasonde nimmt demzufolge ab.

Nach dem vollständigen Aufwärmen des Motoröls bei etwa 30 min nimmt das Rohsignal einen nahezu konstanten Wert an, welcher dem kurz nach dem Start vorgelegenen Wert sehr nahe kommt. Den entsprechenden Verlauf von Lambda in Abhängigkeit von der Öltemperatur in dem genannten Zeitfenster bis 30 min veranschaulicht die Fig. 1b.

In Situationen wie bspw. dem Winterbetrieb eines Kraftfahrzeugs, bei denen der Motor bei sehr tiefen Temperaturen gestartet wird, oder in Fällen, bei denen mehrere Wiederholstarts erfolgen, kann die in das Motoröl eingetragene Kraftstoffmenge beim Start sehr groß sein. Die Anfettung nach 10-minütigem Motorbetrieb kann in diesen Fällen sogar beträchtliche Werte annehmen. Allerdings ist auch in solchen Fällen nach einer Stunde des Motorbetriebs im Leerlauf das Benzin weitestgehend ausgedampft.

Kommt nun zum beschriebenen Benzineintrag im Kaltstart eine während des Motorbetriebs kontinuierlich eingetragene Kraftstoffmenge hinzu, dann verändert sich das Ausdampfverhalten dahingehend, dass nach der raschen Ausdampfung des Kraftstoffs bis hin zu 10 min Betriebszeit des Motors keine oder zumindest keine vollständige Annäherung an den Ausgangswert nach 60-minütigem Betrieb stattfindet. Statt dessen verharrt in diesem Fall das Lambda-Signal auf einem wesentlich reduzierten, d.h. fetteren Lambda-Wert. Da dieser Lambda-Wert auch durch die oben beschriebenen anderen Einflussgrößen verändert werden kann, ist nicht der absolute Wert ausschlaggebend, sondern es hat ein Vergleich zwischen dem Lambda-Wert nach 60 min Betrieb mit dem innerhalb von 3-5 min nach dem Start des Motors ermittelten Lambda-Wert zu erfolgen. Da die übrigen Einflussgrößen bereits bei kaltem Motor vorhanden sind, wird der Einfluss dieser Störungen durch die genannte Differenzbildung der Lambda-Werte eliminiert.

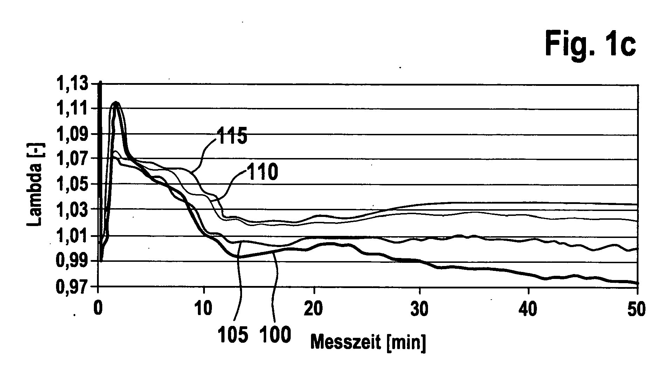

Die Fig. 1c zeigt sich typisch ergebende (gemessene) Verläufe von Lambda in Situationen mit einer nicht funktionierenden Dichtung zwischen dem Ölkreislauf und dem Kraftstoffkreislauf, d.h. es tritt vorliegend aufgrund eines kontinuierlichen Kraftstoffeintrags eine eingangs beschriebene Ölverdünnung auf. Gemessen wurde wiederum der Lambdawert bei einem Kaltstart im Leerlauf bis zu einer Motorbetriebstemperatur von 80° C. Die unterschiedlichen Kurven stellen dabei Verläufe mit jeweils unterschiedlicher Höhe des kontinuierlichen Kraftstoffeintrags dar, wobei die Höhe des Kraftstoffeintrags von der unteren Kurve 100 bis zur oberen Kurve 115 systematisch abnimmt.

Die Lambdakurven 100 - 115 entsprechen jeweils Kraftstoffeinträgen von in der genannten Reihenfolge 160 ml/h, 80 ml/h, 40 ml/h und 20 ml/h. Somit können diese Leckagemengen der eingangs genannten Hochdruckpumpe bzw. die daraus resultierenden Kraftstoffeinträge in das Schmieröl der Brennkraftmaschine bereits im Warmlauf der Brennkraftmaschine deutlich voneinander unterschieden werden.

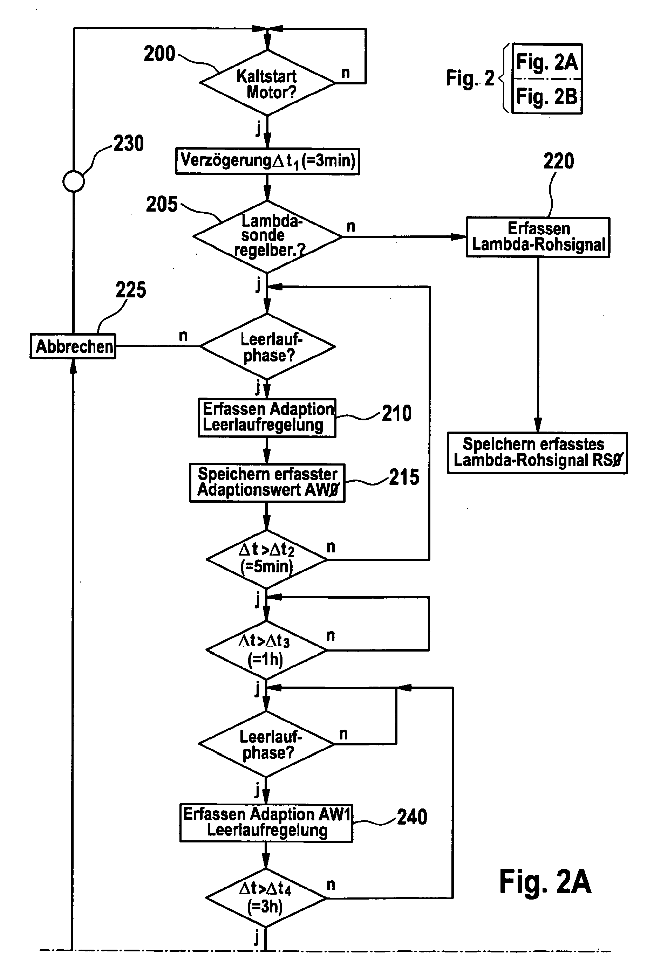

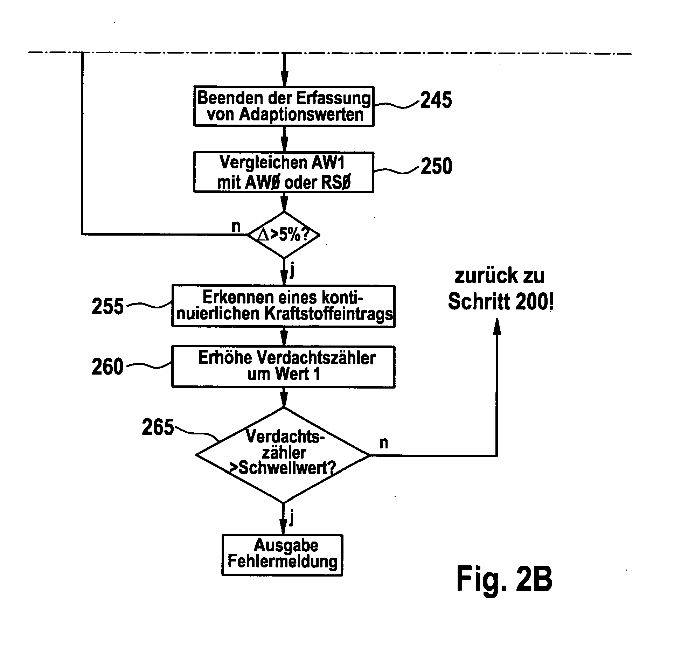

Anhand der Fig. 2 wird nun eine bevorzugte Ausführungsform des erfindungsgemäßen Verfahrens zur vorgenannten quantitativen Ermittlung eines Benzineintrags in das Motoröl einer Brennkraftmaschine anhand eines Flussdiagramms beschrieben.

Nach erfasstem Start 200 des Motors wird zunächst nach Ablauf einer Zeit t1 von bevorzugt 3 min nach dem Start geprüft 205, ob die Lambdasonde bereits regelbereit ist. Ist dies der Fall, so wird im bevorzugten Zeitfenster Δt2 von 3 bis 5 min nach dem Start des Motors eine durch die Lambdasonde in an sich bekannter Weise verursachte Adaption der Leerlaufregelung erfasst 210 und gespeichert 215. Liegt in dem Zeitfenster Δt2 allerdings noch keine Regelbereitschaft der Lambdasonde vor, so wird das Rohsignal der Lambdasonde erfasst 220 und für die nachfolgenden Ermittlungsschritte herangezogen. Tritt in dem Zeitintervall Δt2 keine Leerlaufphase im Betrieb des Motors auf, so ist die Ermittlung des Benzineintrags nicht möglich und wird bei dem vorliegenden Kaltstart insbesondere zur Ressourcenschonung abgebrochen 225. Die Ermittlung des Benzineintrags wird dann beim nächsten Kaltstart erneut versucht 230.

Konnte ein Startwert der Lambda-Adaption oder ein Lambda-Rohwert erfasst werden, so wird nach einem Betrieb des Motors für mindestens 1 h erfasst 235, ob eine Leerlaufphase vorliegt. Liegt dieser Zustand vor, wird ein aktueller Wert der Lambda-Adaption im nunmehr vorliegenden eingeschwungenen Zustand erfasst 240.

Es ist hervorzuheben, dass der Zeitpunkt der Erfassung der Lambda-Adaption nicht zu spät im Fahrbetrieb des Motors bzw. Kraftfahrzeugs erfolgen sollte, da Abweichungen der genannten Störgrößen mit längerer Motorlaufzeit wahrscheinlicher werden. Die Erfassung der genannten Lambda-Werte wird daher in dem vorliegenden Ausführungsbeispiel nach 3 h abgebrochen 245, wenn bis dahin keine Leerlaufphase aufgetreten ist.

Der aktuell erfasste Wert von Lambda wird erfindungsgemäß mit dem Ausgangswert verglichen 250. Bei einer Abweichung von Lambda von mehr als 5 % vom Ausgangswert wird das Vorliegen eines kontinuierlichen Eintrags von Kraftstoff diagnostiziert 255. Wenn diese Abweichung diagnostiziert wird, wird in dem vorliegenden Ausführungsbeispiel ein bevorzugt in einem Motorsteuergerät vorgesehener Verdachtszähler um den Wert '1' erhöht 260. Erreicht bzw. überschreitet der aktuelle Stand des genannten Verdachtszählers nach einer Anzahl von Kaltstarts einen empirisch vorgebbaren Schwellwert 265, erfolgt eine Fehlerreaktion, bspw. eine über die Fahrzeugarmaturen ausgegebene Fehlermeldung oder ein Servicehinweis an den Fahrer. Alternativ kann der genannte Verdachtszähler bei einer üblichen Fahrzeuginspektion ausgelesen werden.

## Patentansprüche

1. Verfahren zur Erkennung eines kontinuierlichen Kraftstoffeintrags in das Schmieröl einer Brennkraftmaschine beim Kaltstart, **dadurch gekennzeichnet, dass** der kontinuierliche Kraftstoffeintrag mittels einer Lambda-Regelung erkannt wird (205).

2. Verfahren nach Anspruch 1, **dadurch gekennzeichnet, dass** der kontinuierliche Kraftstoffeintrag anhand der Ausgasung von Kraftstoff aus einem Kurbelgehäuse der Brennkraftmaschine ermittelt wird, wobei die Abmagerung von Adaptionswerten einer Leerlaufregelung zugrunde gelegt wird (210).

3. Verfahren nach Anspruch 2, **dadurch gekennzeichnet, dass** eine zeitliche Änderung der Adaptionswerte der Leerlaufregelung in Abhängigkeit von einer reproduzierbaren Änderung des Zustandes der Brennkraftmaschine herangezogen wird.

4. Verfahren nach Anspruch 3, **dadurch gekennzeichnet, dass** das Vorliegen der reproduzierbaren Änderung beim Kaltstart der Brennkraftmaschine in einem Temperaturbereich der Brennkraftmaschine bzw. des Schmieröls der Brennkraftmaschine von 10 bis 30° C angenommen wird.

5. Verfahren nach einem der vorhergehenden Ansprüche, **dadurch gekennzeichnet, dass** die Erkennung des kontinuierlichen Kraftstoffeintrags in einer Leerlaufbetriebsphase (235) der Brennkraftmaschine erfolgt.

6. Verfahren nach einem der Ansprüche 2 bis 5, **dadurch gekennzeichnet, dass** die genannten Adaptionswerte der Leerlaufregelung im eingeschwungenen Zustand der Brennkraftmaschine erfasst werden.

7. Verfahren nach einem der vorhergehenden Ansprüche, **dadurch gekennzeichnet, dass** die Erkennung des kontinuierlichen Kraftstoffeintrags in einem Zeitbereich bis bevorzugt 3 h nach dem Kaltstart der Brennkraftmaschine durchgeführt wird (245).

8. Verfahren nach einem der vorhergehenden Ansprüche, **dadurch gekennzeichnet, dass** ein aktuell erfasster Wert von Lambda mit einem Ausgangswert verglichen wird und bei einer Abweichung von Lambda von bevorzugt mehr als 5 % vom Ausgangswert das Vorliegen eines kontinuierlichen Eintrags von Kraftstoff erkannt wird (255).

9. Verfahren nach Anspruch 8, **dadurch gekennzeichnet, dass** bei Erkennung des Vorliegens eines kontinuierlichen Eintrags von Kraftstoff ein bevorzugt in einem Steuergerät der Brennkraftmaschine angeordneter Verdachtszähler um einen Wert, bevorzugt um den Wert '1', erhöht wird (260) und dass bei Erreichen oder Überschreiten des aktuellen Verdachtszählerwertes eines empirisch vorgebbaren Schwellwerts (265) eine Fehlerreaktion erfolgt.

10. Steuergerät zum Betrieb einer Brennkraftmaschine, **gekennzeichnet durch** Mittel zur Durchführung des Verfahrens nach einem der vorhergehenden Ansprüche zur Erkennung eines kontinuierlichen Kraftstoffeintrags in das Schmieröl der Brennkraftmaschine.

## Claims

1. Method for detecting a continuous ingress of fuel into the lubricating oil of an internal combustion engine during a cold start, **characterized in that** the continuous ingress of fuel is detected by means of a lambda regulation (205).

2. Method according to Claim 1, **characterized in that** the continuous ingress of fuel is determined on the basis of the evaporation of fuel out of a crankcase of the internal combustion engine, with the leaning of adaptation values of an idle regulation being taken as a basis (210).

3. Method according to Claim 2, **characterized in that** a change of the adaptation values of the idle regulation over time as a function of a reproducible change in the state of the internal combustion engine is taken into consideration.

4. Method according to Claim 3, **characterized in that** the reproducible change is assumed to be present during the cold start of the internal combustion engine in a temperature range of the internal combustion engine or of the lubricating oil of the internal combustion engine of 10 to 30°C.

5. Method according to one of the preceding claims, **characterized in that** the detection of the continuous ingress of fuel takes place in an idle running phase (235) of the internal combustion engine.

6. Method according to one of Claims 2 to 5, **characterized in that** the stated adaptation values of the idle regulation are measured in the steady state of the internal combustion engine.

7. Method according to one of the preceding claims, **characterized in that** the detection of the continuous ingress of fuel is carried out (245) in a time period of up to preferably 3 hours after the cold start of the internal combustion engine.

8. Method according to one of the preceding claims, **characterized in that** a presently measured value of lambda is compared with an initial value and the presence of a continuous ingress of fuel is detected (255) in the event of a deviation of lambda of preferably more than 5% from the initial value.

9. Method according to Claim 8, **characterized in that**, in the event of the detection of the presence of a continuous ingress of fuel, a suspicion counter which is preferably arranged in a control unit of the internal combustion engine is increased (260) by a value, preferably by the value "1", and **in that** a fault reaction occurs if the present suspicion counter value reaches or overshoots an empirically predefinable threshold value (265).

10. Control unit for operating an internal combustion engine, **characterized by** means for carrying out the method according to one of the preceding claims in order to detect a continuous ingress of fuel into the lubricating oil of the internal combustion engine.

## Revendications

1. Procédé de détection d'une pénétration continue de carburant dans l'huile de lubrification d'un moteur à combustion interne lors d'un démarrage à froid, **caractérisé en ce que** la pénétration continue de carburant est détectée au moyen d'une régulation lambda (205).

2. Procédé selon la revendication 1, **caractérisé en ce que** la pénétration continue de carburant est déterminée à l'aide d'un dégazage de carburant hors d'un carter de vilebrequin du moteur à combustion interne, l'appauvrissement de valeurs d'adaptation étant utilisé comme base d'une régulation de ralenti (210).

3. Procédé selon la revendication 2, **caractérisé en ce que** l'on utilise une variation temporelle des valeurs d'adaptation de la régulation du ralenti en fonction d'une variation reproductible de l'état du moteur à combustion interne.

4. Procédé selon la revendication 3, **caractérisé en ce que** la présence de la variation reproductible lors du démarrage à froid du moteur à combustion interne est supposée dans une plage de température du moteur à combustion interne ou de l'huile de lubrification du moteur à combustion interne de 10 à 30°C.

5. Procédé selon l'une quelconque des revendications précédentes, **caractérisé en ce que** la détection de la pénétration continue de carburant a lieu dans une phase de fonctionnement au ralenti (235) du moteur à combustion interne.

6. Procédé selon l'une quelconque des revendications 2 à 5, **caractérisé en ce que** lesdites valeurs d'adaptation de la régulation du ralenti sont détectées dans l'état stationnaire du moteur à combustion interne.

7. Procédé selon l'une quelconque des revendications précédentes, **caractérisé en ce que** la détection de la pénétration continue de carburant est effectuée (245) dans un intervalle de temps jusqu'à 3h, de préférence, après le démarrage à froid du moteur à combustion interne.

8. Procédé selon l'une quelconque des revendications précédentes, **caractérisé en ce qu'**une valeur actuellement détectée de lambda est comparée avec une valeur de départ et en cas d'écart de lambda de plus de 5% par rapport à la valeur de départ, on détecte la présente d'une pénétration continue de carburant (255).

9. Procédé selon la revendication 8, **caractérisé en ce que** dans le cas d'une détection de la présence d'une pénétration continue de carburant, un compteur d'affirmatives disposé de préférence dans un appareil de commande du moteur à combustion interne est augmenté d'une valeur, de préférence de la valeur "1" (260), et **en ce qu'**à l'obtention ou au dépassement de la valeur actuelle du compteur d'affirmatives d'une valeur seuil (265) prédéfinissable par expérience, il se produit une réaction d'erreur.

10. Appareil de commande pour faire fonctionner un moteur à combustion interne, **caractérisé par** des moyens pour mettre en oeuvre le procédé selon l'une quelconque des revendications précédentes, pour détecter une pénétration continue de carburant dans l'huile de lubrification du moteur à combustion interne.
